# EUROPEAN PATENT SPECIFICATION

(11) **EP 3 911 496 B1**
(45) Date of publication and mention of the grant of the patent: **03.01.2024**
(21) Application number: 19935448.1
(22) Date of filing: 25.06.2019
(51) Int. Cl.: B29C 64/20, B29C 64/218, B29C 64/393, B33Y 30/00, B22F 10/37, B22F 12/63, B29C 64/236, B29C 64/241

(54) **ROLLER CONTROL FOR A 3D PRINTER**
WALZENSTEUERUNG FÜR EINEN 3D-DRUCKER
COMMANDE DE ROULEAU POUR IMPRIMANTE 3D

(43) Date of publication of application: 24.11.2021
(73) Proprietor: Hewlett-Packard Development Company, L.P., Spring TX 77389 (US)
(72) Inventor: BARNES, Arthur Herbert, Vancouver, Washington 98683 (US)
(74) Representative: Haseltine Lake Kempner LLP
(86) International application number: PCT/US2019/038937
(87) International publication number: WO 2020/263227

(56) References cited:
- EP-A1- 3 401 082
- WO-A1-2014/138386
- WO-A1-2015/196149
- WO-A1-2017/083734
- CA-A1- 3 037 789
- CN-A- 107 900 285
- FR-A1- 3 021 568
- US-A1- 2012 164 322

## Description

### BACKGROUND

3D printers produce objects by building up layers of material. 3D printers are also commonly referred to as additive manufacturing machines. 3D printers convert a CAD (computer aided design) model or other digital representation of an object into the physical object. The model data may be processed into slices each defining that part of a layer of build material to be formed into the object. EP3401082A1 and WO2017/083734 disclose 3D printers comprising a roller to spread and compact layered powder material.

### DRAWINGS

Figs. 1-24 present a sequence of elevation and plan views showing a fusing system in a 3D printer implementing one example of a build material powder layering process.
Figs. 25 and 26 are details from Figs. 21 and 23, respectively.
Fig. 27 is a block diagram illustrating an example fusing system such as the one shown in Figs. 1-24.
Figs. 28 and 29 are flow diagrams illustrating example build material powder layering processes such as might be implemented with a fusing system shown in Fig. 27.

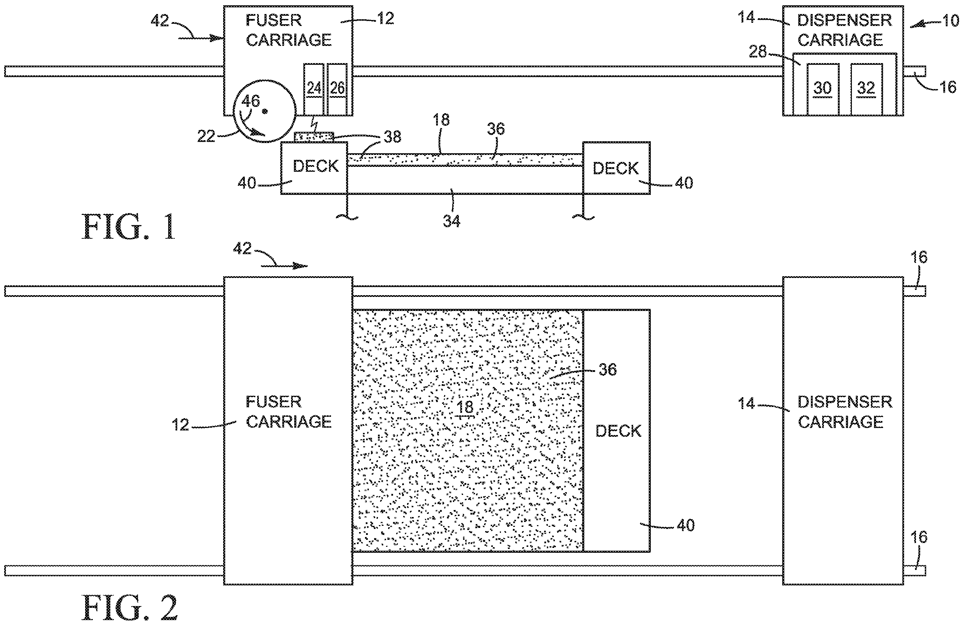

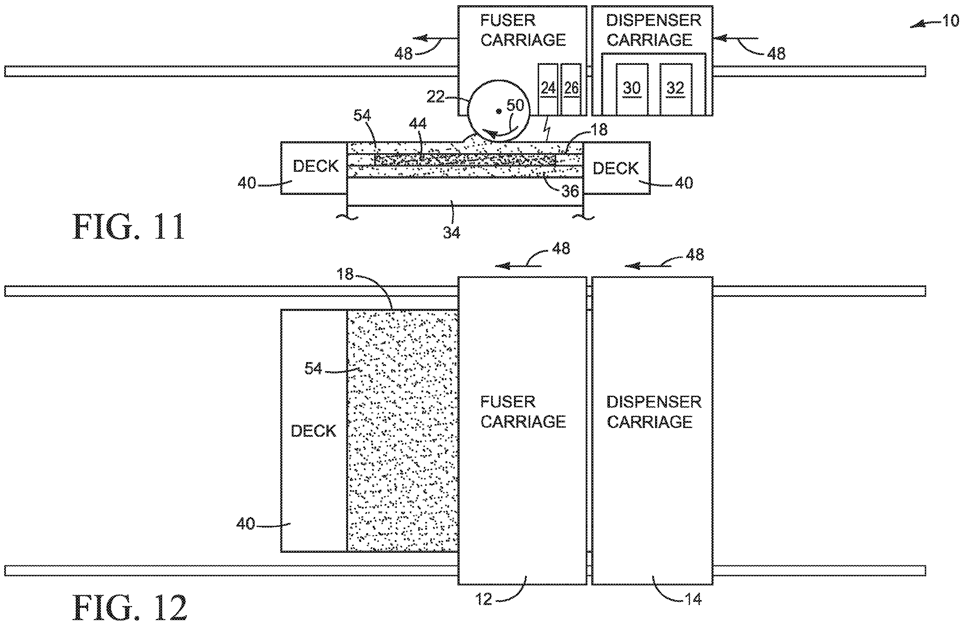

The same part numbers designate the same or similar parts throughout the figures. The figures are not to scale. The scale of the layers of build material and object slices is greatly exaggerated in the figures. Each layer of build material in a fusing process such as that shown in Figs. 1-24 may be on the order of tens of microns thick with thousands of layers to manufacture an object.

### DESCRIPTION

In some 3D printers, heat is used to fuse together particles in a powdered build material to form a solid object. Heat to fuse the build material may be generated, for example, by applying a liquid fusing agent to a thin layer of powdered build material in a pattern based on the object slice and then exposing the patterned area to fusing light. Light absorbing components in the fusing agent absorb light energy to help heat the patterned build material above a fusing temperature to sinter or melt and thus fuse the build material. Other liquid agents may be used to produce the desired characteristics of an object. For example, a detailing agent may be used to enhance or inhibit fusing in certain regions of an object and coloring agents may be used to color the object. The process is repeated layer by layer and slice by slice to complete the object.

Spreading consistent, higher density layers of build material powder improves object quality. Lower density layers of powder can cause weak material properties and holes, craters or other defects in the object. One technique to increase layer density uses a "counter-rotating" roller to spread the build material powder. The roller is rotated into the direction of travel to push the powder across the work surface. Unfused powder in the underlying layers is easily disturbed when spreading the next layer of powder if the tangential speed of a counter-rotating roller is slower than the translational speed of the roller. Disturbing unfused powder in underlying layers is a particular problem when printing objects with specially colored surfaces because unfused powder treated with a liquid coloring agent may be dragged across the work surface and contaminate adjacent areas of the in-process structure

A new layering technique has been developed to reduce the risk that unfused powder will be disturbed while forming the next layer of powder, while still delivering consistent, higher density layers. In one example, a process to layer build material powder in a 3D printer includes, in a first pass, spreading build material powder in a layer and, in a second pass, compacting the layered build material powder. For example, (1) the powder is spread in the first pass by pushing the powder across the work surface with a counter-rotating roller translating at a first translational speed and simultaneously rotating with a first tangential speed of rotation faster than the first translational speed and (2) the powder is compacted in the second pass by translating the roller over the layered powder at a second translational speed and simultaneously rotating the roller at a second tangential speed of rotation slower than the second translational speed. Rotating the roller faster in the first pass reduces compaction to lower the risk of disturbing unfused powder in the underlying layers. Rotating the roller slower in the second pass increases compaction for a higher density layer but with little risk of disturbing unfused powder in the underlying layers because the unfused powder has already been covered in the first pass.

Examples of the new technique may also be useful for 3D printing techniques in which a binder applied to the build material is cured with light and/or heat to form a "green part" that is subsequently heated in a sintering furnace to form the final object. Accordingly, "fusing" as used in this document includes 3D printer binding as well as melting and sintering.

These and other examples shown in the figures and described below illustrate but do not limit the scope of the patent, which is defined in the Claims following this Description.

As used in this document: "and/or" means one or more of the connected things; "fusing" includes melting, sintering, and/or binding; a "memory" means any non-transitory tangible medium that can embody, contain, store, or maintain instructions and other information for use by a processor and may include, for example, circuits, integrated circuits, ASICs (application specific integrated circuits), hard drives, random access memory (RAM) and read-only memory (ROM); "work surface" means any suitable surface to support or contain build material for fusing, including underlying layers of build material and in-process slice and other object structures; and "tangential speed of rotation" means the tangential speed of a roller due to rotation only and does include tangential speed due to translation of the roller.

In the figures: build material without any agent is depicted by light stippling; build material with only coloring agent is depicted by medium stippling; build material with only fusing agent is depicted by checked hatching; build material with coloring agent and fusing agent is depicted by dark stippling; and fused build material is depicted by regular cross hatching.

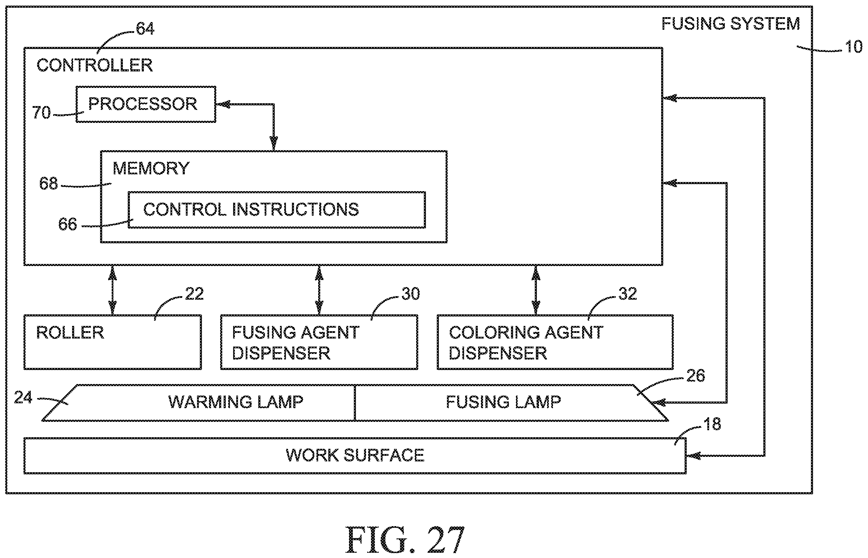

Figs. 1-24 present a sequence of elevation and plan views showing a fusing system 10 for a 3D printer implementing one example of a new build material powder layering process. Fig. 27 is a block diagram illustrating a fusing system 10 such as the one shown in Figs. 1-24. Referring to Figs. 1, 2 and 27, fusing system 10 includes a first, "fuser" carriage 12 and a second, "dispenser" carriage 14. Carriages 12 and 14 move back and forth on rails 16 over a work surface 18. Fuser carriage 12 carries a roller 22, a warming lamp 24, and a fusing lamp 26. "Warming" in this context refers to the preheating function of warming lamp 24 to help heat unfused build material to a temperature nearer the fusing temperature. Although a single warming lamp is shown, multiple warming lamps or other radiant heating devices 24 could be used. Also, while a single fusing lamp 26 is depicted, multiple fusing lamps may be used. Dispenser carriage 14 carries an inkjet printhead assembly or other suitable liquid dispensing assembly 28 to dispense a fusing agent. Assembly 28 may also dispense other agents. In this example, dispensing assembly 28 includes a first dispenser 30 to dispense a coloring agent and a second dispenser 32 to dispense a fusing agent.

As noted above in the definitions, work surface 18 represents any suitable structure to support or contain build material for fusing, including underlying layers of build material and in-process slice and other object structures. For a first layer of build material, for example, work surface 18 may be formed on the surface of a platform 34 that moves up and down to accommodate the layering process. For succeeding layers of build material, work surface 18 may be formed on an underlying structure 36. In Fig. 1, underlying structure 36 is a first layer of build material powder 38.

In Figs. 1 and 2, a pile of build material 38 has been deposited along a deck 40 adjacent to work surface 18, roller 22 is deployed, warming lamp 24 is on, and fuser carriage 12 is moving to the right in a first layering pass, as indicated by motion arrows 42.

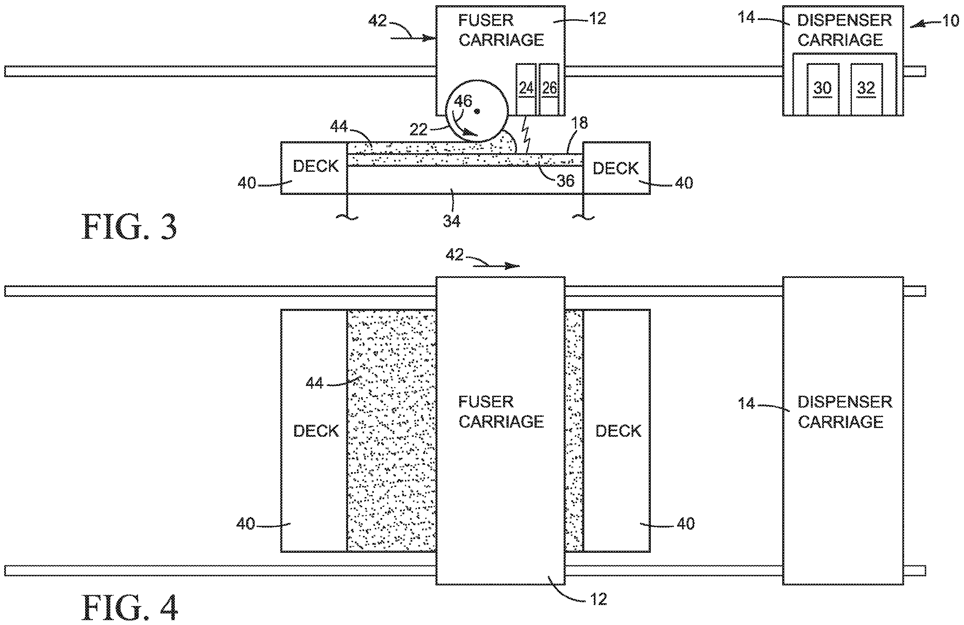

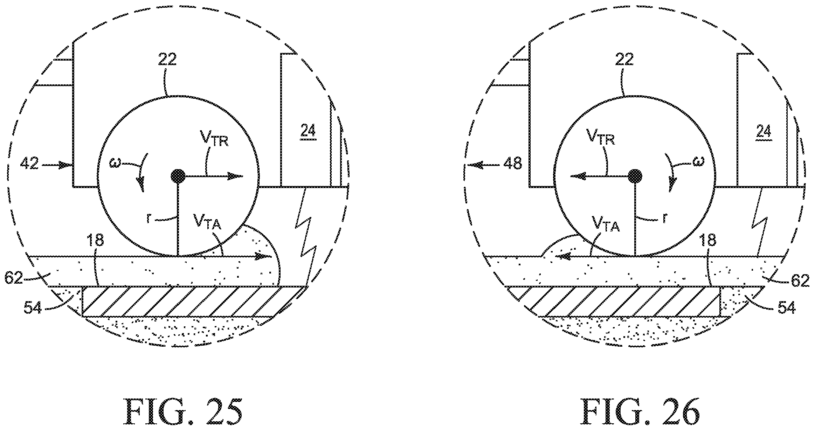

In Figs. 3 and 4, as fuser carriage 12 continues moving to the right, warming lamp 24 heats first layer 36 while roller 22 spreads powder 38 in a layer 44 over first layer 36. As described below with reference to the detail view of Fig. 25, on this first pass roller 22 is rotated at an angular velocity that results in a tangential speed of rotation faster than the translational speed of roller 22, and in the same direction 42 that roller 22 is moving overwork surface 18, as indicated by rotation arrow 46.

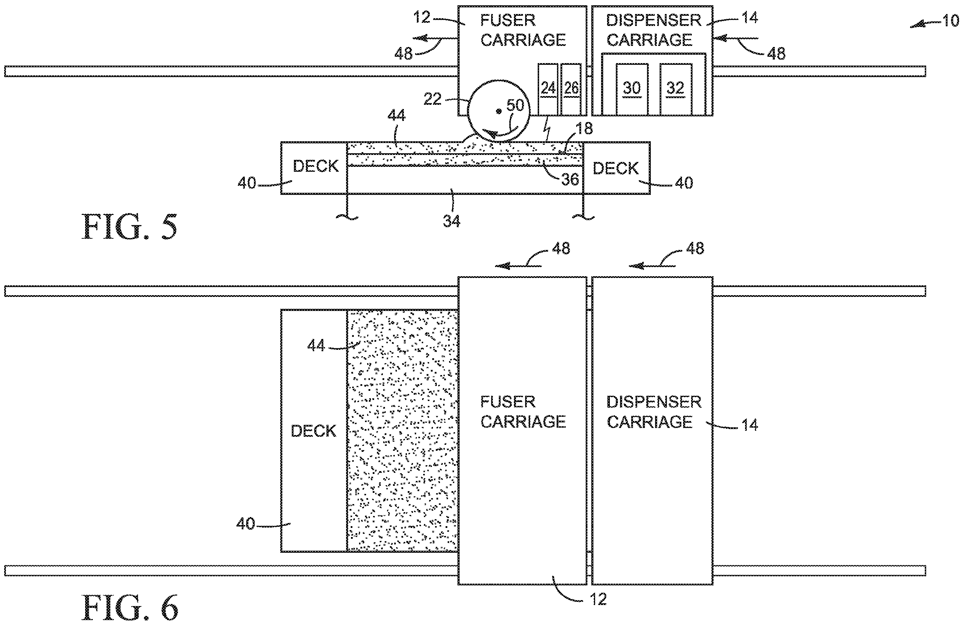

In Figs. 5 and 6, fuser carriage 12 is moving to the left in a second layering pass, as indicated by motion arrows 48. Roller 22 is deployed to compact build material in layer 44 against work surface 18. As described in detail below with reference to the detail view of Fig. 26, on this second pass roller 22 is rotated at an angular velocity that results in a tangential speed of rotation slower than the translational speed of roller 22 and in the same direction 48 roller 22 is moving over work surface 18, as indicated by rotation arrow 50. Warming lamp 24 is on to warm build material in layer 44.

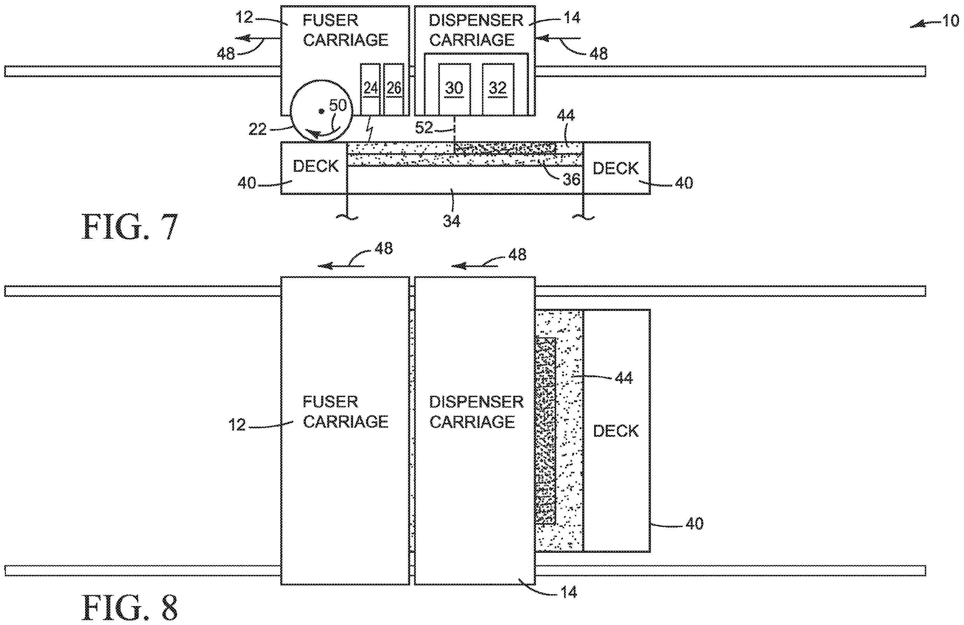

In Figs. 7 and 8, dispenser carriage 14 follows fuser carriage 12 in the second pass with dispenser 30 dispensing a coloring agent 52 on to build material powder in layer 44 to color the bottom surface of the object.

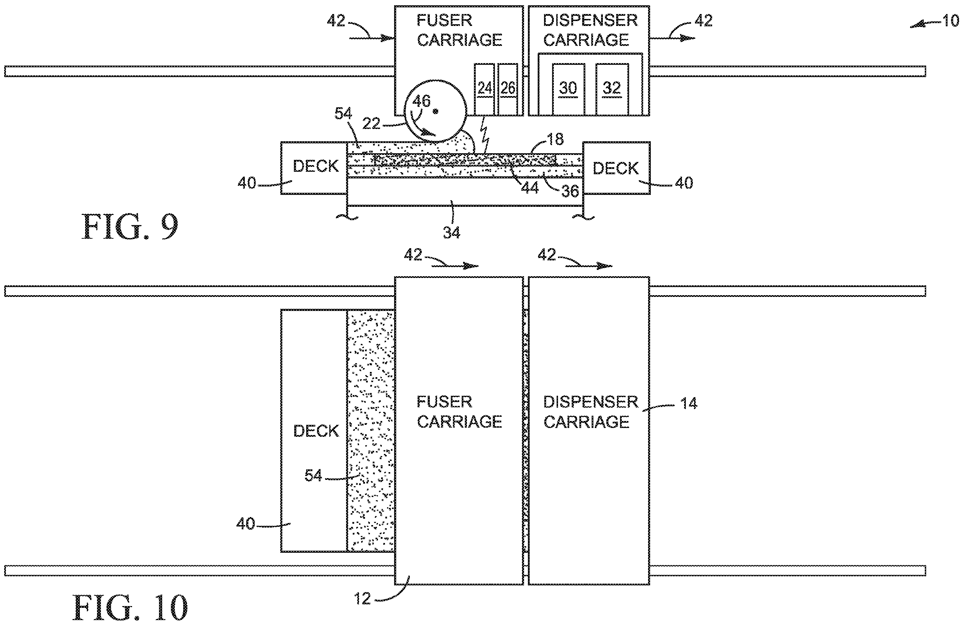

Figs. 9-12 show a next (third) layer 54 spread and compacted on underlying (second) layer 44 in first and second layering passes.

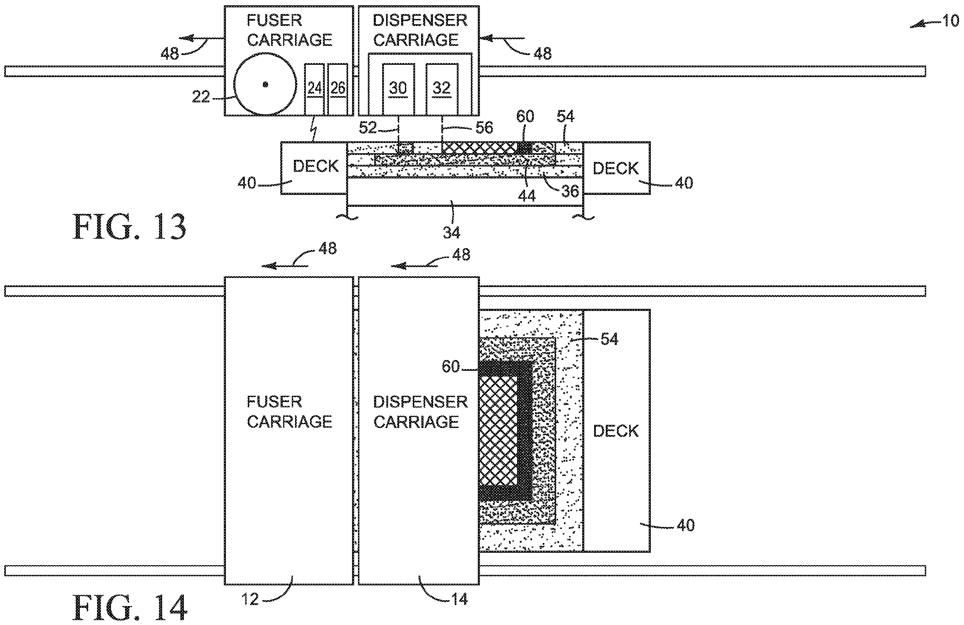

In Figs. 13 and 14, dispenser carriage 14 follows fuser carriage 12 in the second pass with dispenser 30 dispensing a coloring agent 52 on to build material powder in layer 54 across an area spanning the outer periphery of the object slice, to color the sides of the object. Also, dispenser 32 is dispensing a fusing agent 56 in a pattern corresponding to the object slice. The band 60 of dark stippling in Figs. 13 and 14 indicates the overlap where build material at the outer periphery of the object slice that is treated with both coloring agent and fusing agent. When fused, this band will form the colored outer surface of the object.

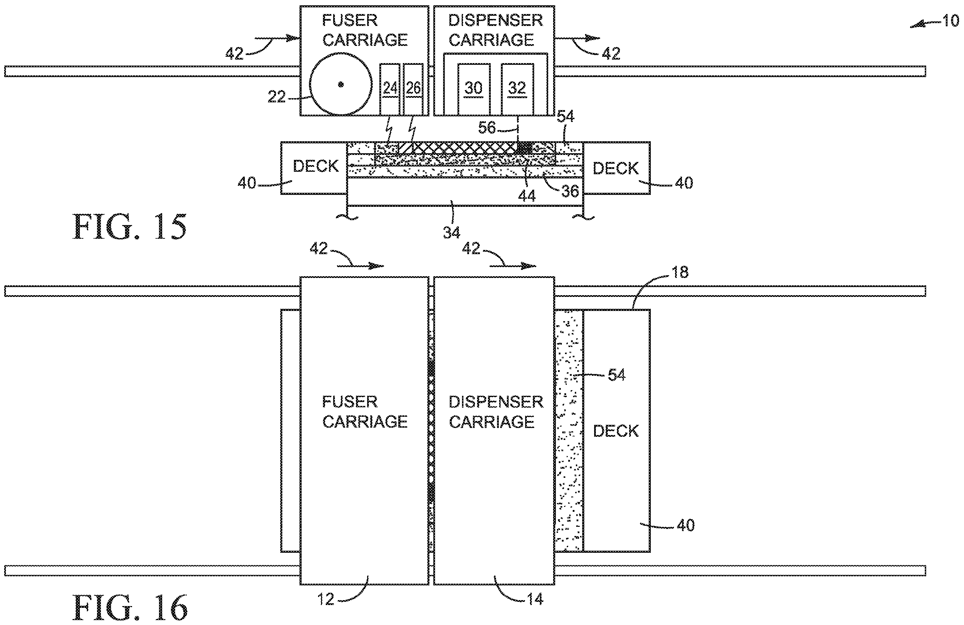

In Figs. 15 and 16 dispenser carriage 14 is moving to the right in a first fusing pass with dispenser 32 dispensing additional fusing agent 56 on to previously patterned and/or unpatterned build material in layer 54. Fuser carriage 12 follows dispenser carriage 14 over work surface 18 with fusing lamp 26 on to irradiate build material 54 with fusing light to fuse the build material patterned with fusing agent 56. The fused build material forms a first object slice shown by regular cross hatching in the figures. In this example, warming lamp 24 is on in the second pass, for example to slow the cooling of fused build material.

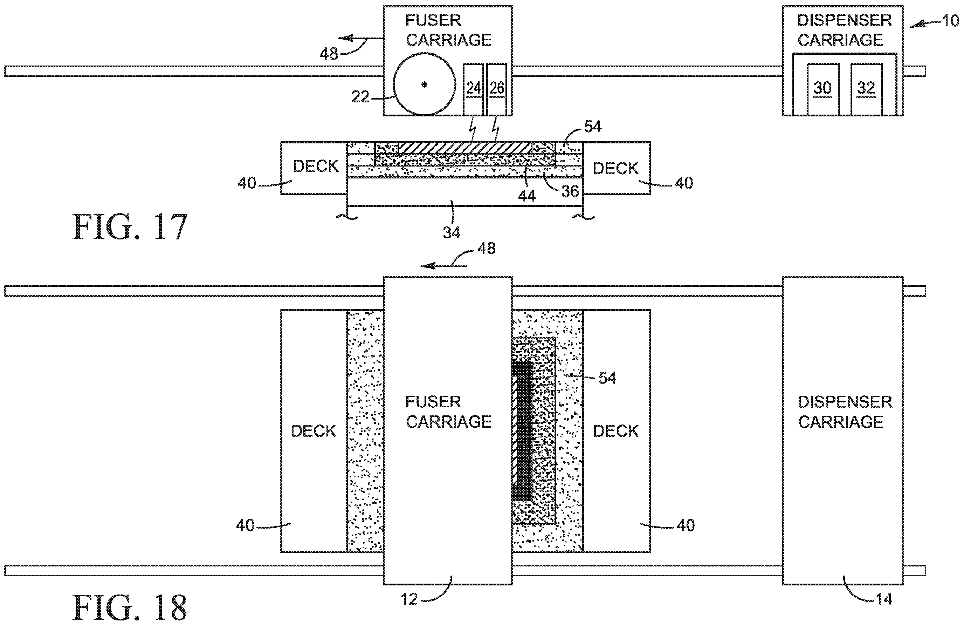

In Figs. 17 and 18, dispenser carriage 14 is parked while fuser carriage 12 moves to the left in a second fusing pass with warming lamp 24 and fusing lamp 26 on to irradiate fused build material 58. The nearly continuous exposure to both the heat from warming lamp 24 and the light from fusing lamp 26 in the second fusing pass helps keep build material fused in the first pass at or above the fusing temperature for more complete fusing.

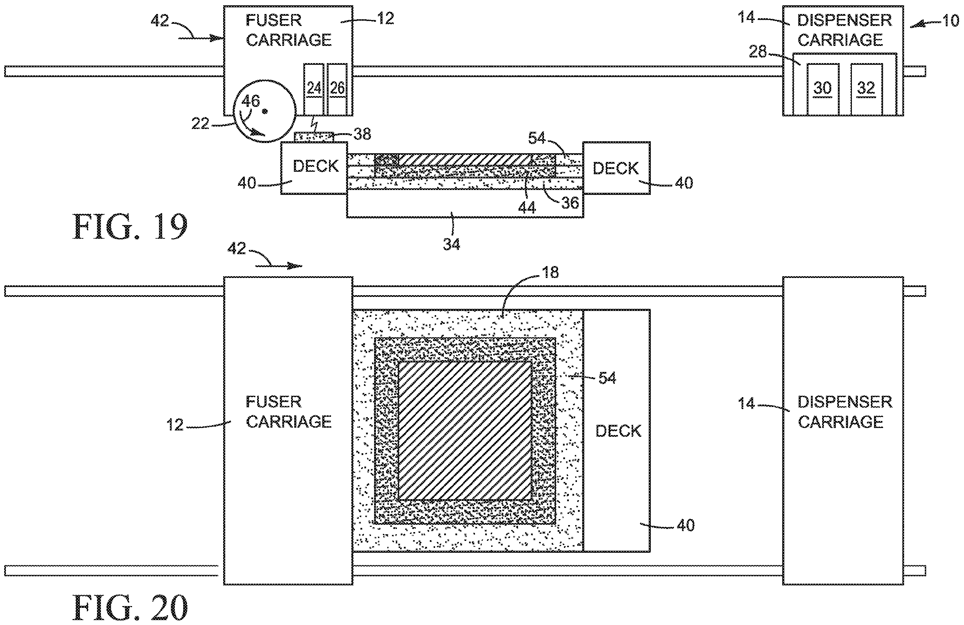

The sequence then begins again to spread and compact the next (fourth) layer 62 of build material as shown in Figs. 19-24. Layering and fusing continues layer by layer and slice by slice to complete the object.

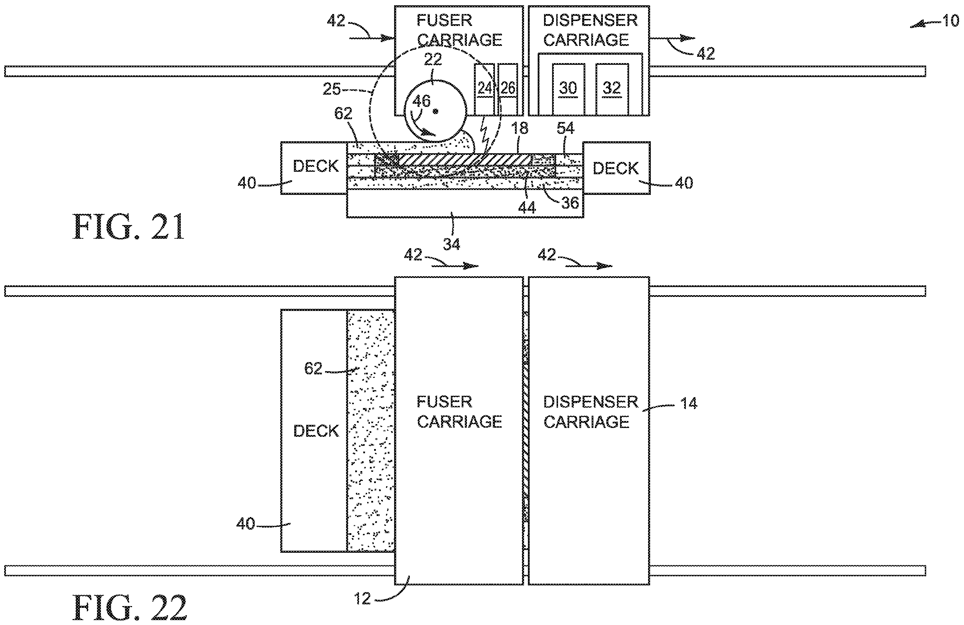

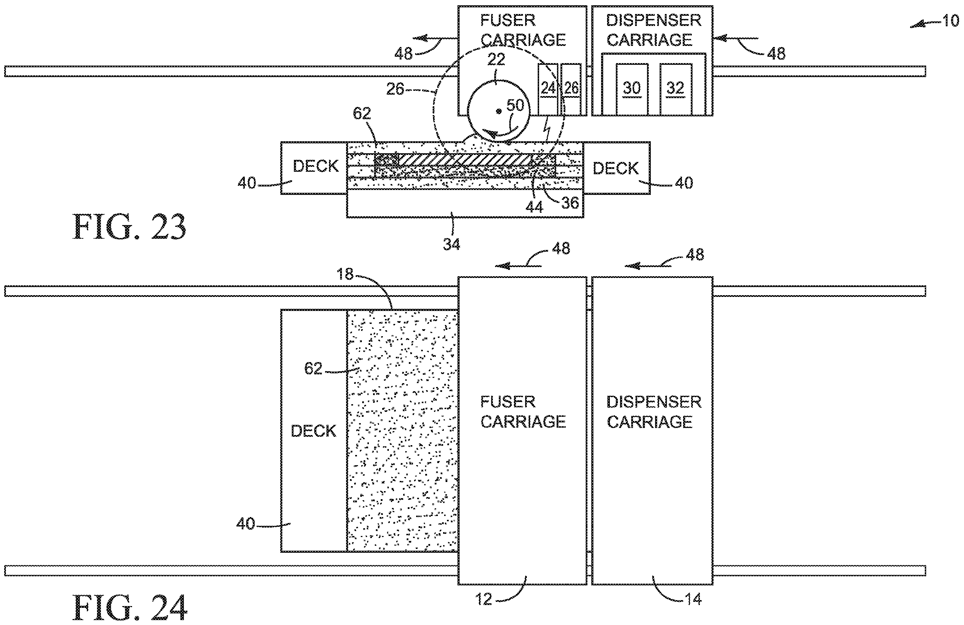

Figs. 25 and 26 are detail views from Figs. 21 and 23, respectively. In Fig. 25, roller 22 is moving right on the first layering pass, pushing build material powder across work surface 18 to form layer 62. In Fig. 26, roller 22 is moving left in the second layering pass, compacting powder in layer 62 against work surface 18. In this example, the axis of translation is the same for both passes.

Referring to Fig. 25, roller 22 is carried overwork surface 18 from left to right at a translational speed V_{TR}. Roller 22 is rotated counter-clockwise at an angular velocity ω that results in a tangential speed of rotation V_{TA} in the same direction as V_{TR} and greater than V_{TR}. A V_{TA} faster than the V_{TR} in the same direction while spreading powder 38 in the first layering pass reduces drag along work surface 18 to lower the risk of disturbing unfused powder in the underlying layer(s). Testing indicates that, for a translational speed about 17 inches per second (43 cm/s) layering polyamide build material powder to a thickness of about 80µm, a ratio between the translational speed and the tangential speed of rotation (V_{TR}/V_{TA}) in the range of 1.0 to 0.7 spreads the powder without significantly disturbing unfused powder in the underlying layer(s). Thus, any compaction that may occur during a spreading pass will not adversely affect the underlying layer(s). Testing also indicates that faster rotational speeds resulting in V_{TR}/V_{TA} less than 0.7 entrain fine powder particles in the airflow around the roller and contaminate the surrounding environment.

Referring to Fig. 26, roller 22 is carried over work surface 18 right to left at a translational speed V_{TR}. Roller 22 is rotated clockwise at an angular velocity ω that results in a tangential speed of rotation V_{TA} in the same direction as V_{TR} and less than V_{TR}. A V_{TA} slower than the V_{TR} in the same direction moving over the already layered powder compacts the powder against work surface 18 without significantly disturbing unfused powder in the underlying layer(s). Testing indicates that, for translational speeds about 17 inches per second (43 cm/s) layering polyamide powder to a thickness of about 80µm, a ratio between the translational speed and the tangential speed of rotation (V_{TR}/V_{TA}) in the range of 1.0 to 2.0 on the second pass will compact the layered powder without significantly disturbing unfused powder in the underlying layer(s). Testing also indicates that the increased drag on underlying layers caused by slower rotational speeds with V_{TR}/V_{TA} greater than 2.0 can actually shift underlying structures, resulting in dimensional inaccuracies in the manufactured object.

While it is expected that the translational speed of roller 22 usually will be the same in both passes, it may be desirable in some implementations to move roller 22 over work surface 18 at different translational speeds in the first and second passes.

Other processing and system sequences and configurations are possible. For example, while it is expected that the powder spreading and compacting passes usually will include an outbound and return pass of the roller across the work surface, it may be desirable in some implementations to spread and compact build material powder with the roller moving in the same direction across the work surface (rather than back and forth as shown). If multiple layering rollers are used, it may be possible to spread and compact the powder in a single pass with a leading roller spreading powder in a layer and a trailing roller compacting the powder. More or fewer agent dispensers may be used to dispense more or fewer agents, and more or fewer carriages could be used to carry the movable components. Also, the sequence of dispensing agents may vary from that shown and, although one carriage follows immediately after the other carriage in some passes, the carriages could be staggered as part of the same pass. In some system configurations, a stationary warmer and/or fusing lamp may be used to continuously irradiate the work surface with fusing light (except when blocked by a carriage), rather than intermittently as with carriage mounted components.

Referring again to Fig. 27, fusing system 10 includes a controller 64 programmed with roller control instructions 66. Controller 64 represents the processing and memory resources, programming, and the electronic circuitry and components needed to control the operative elements of system 10. In particular, controller 64 includes a memory 68 with roller control instructions 66 and a processor 70 to read and execute instructions 66, for example to implement the process shown in Figs.1-26.

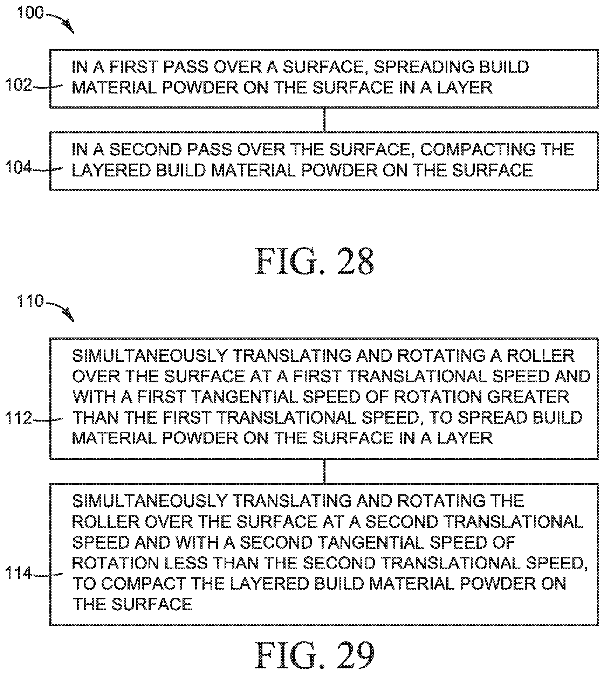

Fig. 28 illustrates an example layering process 100 for a 3D printer, such as might be implemented through a controller 64 executing roller control instructions 66 in fusing system 10 in Fig. 27. Referring to Fig. 27, process 100 includes, in a first pass over a surface, spreading build material powder on the surface in a layer (block 102) and, in a second pass over the surface, compacting the layered build material powder on the surface.

Fig. 29 illustrates another example layering process 110 for a 3D printer, such as might be implemented with a controller 64 executing roller control instructions 66 in fusing system 10 in Fig. 27. Referring to Fig. 28, process 110 includes simultaneously translating and rotating a roller over the surface at a first translational speed and with a first tangential speed of rotation greater than the first translational speed, to spread build material powder on the surface in a layer (block 112), and then simultaneously translating and rotating the roller over the surface at a second translational speed and with a second tangential speed of rotation less than the second translational speed, to compact the layered build material powder on the surface.

The examples shown in the figures and described above illustrate but do not limit the patent, which is defined in the following Claims.

## Claims

1. A system for a 3D printer, comprising:
a roller (22) to spread and compact build material powder (38) on a surface (18); and
a controller (64) operatively connected to the roller and programmed to:
simultaneously translate and rotate the roller over the surface at a first translational speed and with a first tangential speed of rotation greater than the first translational speed, to spread build material powder on the surface in a layer; and then
simultaneously translate and rotate the roller over the surface at a second translational speed and with a second tangential speed of rotation less than the second translational speed, to compact the layered build material powder on the surface.

2. The system of claim 1, wherein the second translational speed is the same as the first translational speed.

3. The system of claim 1, wherein the controller is programmed to:
simultaneously translate and rotate the roller over the surface in a first pass at the first translational speed and with the first tangential speed of rotation to spread build material powder on the surface; and then
simultaneously translate and rotate the roller over the surface in a second pass at the second translational speed and with the second tangential speed of rotation to compact the build material powder on the surface.

4. The system of claim 3, wherein the controller is programmed to:
simultaneously translate and rotate the roller over the surface in the first pass at the first translational speed in a first direction and with the first tangential speed of rotation in the first direction; and then
simultaneously translate and rotate the roller over the surface in the second pass at the second translational speed in a second direction opposite the first direction and with the second tangential speed of rotation in the second direction.

5. The system of claim 1, wherein:
a ratio between the first translational speed and the first tangential speed of rotation is in the range of 1.0 to 0.7, excluding 1.0; and
a ratio between the second translational speed and the second tangential speed of rotation is in the range of 1.0 to 2.0, excluding 1.0.

6. The system of claim 3, wherein the roller is translatable along an axis and the axis of translation is the same for both passes.

7. The system of claim 1, wherein the roller is a counter-rotating roller to rotate into the direction of travel to push powder across the surface.

8. A process to layer build material powder on a surface in a 3D printer, comprising:
in a first pass over the surface, spreading (102) build material powder on the surface in a layer comprising pushing the build material powder across the surface with a roller translating at a first translational speed and simultaneously rotating with a first tangential speed of rotation greater than the first translational speed; and
in a second pass over the surface, compacting (104) the layered build material powder on the surface comprising translating the roller over the layered build material powder at a second translational speed and simultaneously rotating the roller at a second tangential speed of rotation less than the second translational speed.

9. The process of claim 8, wherein:
a ratio between the first translational speed and the first tangential speed of rotation is in the range of 1.0 to 0.7, excluding 1.0; and
a ratio between the second translational speed and the second tangential speed of rotation is in the range of 1.0 to 2.0, excluding 1.0.

10. The process of claim 9, wherein the second translational speed is the same as the first translational speed.

11. A memory having processor readable instructions to, in a 3D printer comprising a system comprising a single roller:
in a first pass, spread build material powder over a surface with the single roller, including:
translate the single roller in a first direction at a first translational speed; and
rotate the translating single roller at a first rotational velocity that results in a first tangential speed of rotation in the first direction greater than the first translational speed; and
in a second pass, compact the build material powder on the surface with the single roller, including:
translate the single roller in a second direction opposite the first direction at a second translational speed; and
rotate the translating single roller at a second rotational velocity that results in a second tangential speed of rotation in the second direction less than the second translational speed.

12. The memory of claim 11, wherein:
a ratio between the first translational speed and the first tangential speed of rotation is in the range of 1.0 to 0.7, excluding 1.0; and
a ratio between the second translational speed and the second tangential speed of rotation is in the range of 1.0 to 2.0, excluding 1.0.

13. The memory of claim 11, wherein the second translational speed is same as the first translational speed.

14. A 3D printer controller implementing the memory of claim 11.

## Patentansprüche

1. System für einen 3D-Drucker, der Folgendes umfasst:
eine Walze (22), um Baumaterialpulver (38) auf einer Oberfläche (18) zu verteilen und zu verdichten; und
eine Steuerung (64), die mit der Walze wirkverbunden und programmiert ist zum:
gleichzeitiges Translatieren und Drehen der Walze über die Oberfläche bei einer ersten Translationsgeschwindigkeit und mit einer ersten Tangentialdrehgeschwindigkeit, die größer als die erste Translationsgeschwindigkeit ist, um Baumaterialpulver auf der Oberfläche in einer Schicht zu verteilen; und anschließend
gleichzeitiges Translatieren und Drehen der Walze über die Oberfläche bei einer zweiten Translationsgeschwindigkeit und mit einer zweiten Tangentialdrehgeschwindigkeit, die kleiner als die zweite Translationsgeschwindigkeit ist, um das geschichtete Baumaterialpulver auf der Oberfläche zu verdichten.

2. System nach Anspruch 1, wobei die zweite Translationsgeschwindigkeit die gleiche wie die erste Translationsgeschwindigkeit ist.

3. System nach Anspruch 1, wobei die Steuerung programmiert ist zum:
gleichzeitiges Translatieren und Drehen der Walze über die Oberfläche in einem ersten Durchgang bei der ersten Translationsgeschwindigkeit und mit der ersten Tangentialdrehgeschwindigkeit, um Baumaterialpulver auf der Oberfläche zu verteilen; und anschließend
gleichzeitiges Translatieren und Drehen der Walze über die Oberfläche in einem zweiten Durchgang bei der zweiten Translationsgeschwindigkeit und mit der zweiten Tangentialdrehgeschwindigkeit, um das Baumaterialpulver auf der Oberfläche zu verdichten.

4. System nach Anspruch 3, wobei die Steuerung programmiert ist zum:
gleichzeitiges Translatieren und Drehen der Walze über die Oberfläche in dem ersten Durchgang bei der ersten Translationsgeschwindigkeit in einer ersten Richtung und mit der ersten Tangentialdrehgeschwindigkeit in der ersten Richtung; und anschließend
gleichzeitiges Translatieren und Drehen der Walze über die Oberfläche in dem zweiten Durchgang bei der zweiten Translationsgeschwindigkeit in einer zweiten Richtung gegenüber der ersten Richtung und mit der zweiten Tangentialdrehgeschwindigkeit in der zweiten Richtung.

5. System nach Anspruch 1, wobei:
ein Verhältnis zwischen der ersten Translationsgeschwindigkeit und der ersten Tangentialdrehgeschwindigkeit in dem Bereich von 1,0 bis 0,7, ausschließlich 1,0, liegt; und
ein Verhältnis zwischen der zweiten Translationsgeschwindigkeit und der zweiten Tangentialdrehgeschwindigkeit in dem Bereich von 1,0 bis 2,0, ausschließlich 1,0, liegt.

6. System nach Anspruch 3, wobei die Walze entlang einer Achse translatierbar ist und die Drehachse für beide Durchgänge gleich ist.

7. System nach Anspruch 1, wobei die Walze eine Gegendrehwalze ist, um sich in die Fahrtrichtung zu drehen, um Pulver über die Oberfläche hinweg zu schieben.

8. Verfahren zum Schichten von Baumaterialpulver auf einer Oberfläche in einem 3D-Drucker, das umfasst:
in einem ersten Durchgang über die Oberfläche, Verteilen (102) von Baumaterialpulver auf der Oberfläche in einer Schicht, die ein Schieben des Baumaterialpulvers über die Oberfläche hinweg mit einer Walze, die bei einer ersten Translationsgeschwindigkeit translatiert wird, und gleichzeitiges Drehen mit einer ersten Tangentialdrehgeschwindigkeit, die größer als die erste Translationsgeschwindigkeit ist, umfasst; und
in einem zweiten Durchgang über die Oberfläche, Verdichten (104) des geschichteten Baumaterialpulvers auf der Oberfläche, die ein Translatieren der Walze über das geschichtete Baumaterialpulver bei einer zweiten Translationsgeschwindigkeit und gleichzeitiges Drehen der Walze bei einer zweiten Tangentialdrehgeschwindigkeit, die kleiner als die zweite Translationsgeschwindigkeit ist, umfasst.

9. Verfahren nach Anspruch 8, wobei:
ein Verhältnis zwischen der ersten Translationsgeschwindigkeit und der ersten Tangentialdrehgeschwindigkeit in dem Bereich von 1,0 bis 0,7, ausschließlich 1,0, liegt; und
ein Verhältnis zwischen der zweiten Translationsgeschwindigkeit und der zweiten Tangentialdrehgeschwindigkeit in dem Bereich von 1,0 bis 2,0, ausschließlich 1,0, liegt.

10. Verfahren nach Anspruch 9, wobei die zweite Translationsgeschwindigkeit gleich der ersten Translationsgeschwindigkeit ist.

11. Speicher, der prozessorlesbaren Anweisungen aufweist, um, in einem 3D-Drucker, der ein System umfasst, das eine einzelne Walze umfasst, Folgendes durchzuführen:
in einem ersten Durchgang, Verteilen von Baumaterialpulver über eine Oberfläche mit der einzelnen Walze, einschließlich:
Translatieren der einzelnen Walze in einer ersten Richtung bei einer ersten Translationsgeschwindigkeit; und
Drehen der translatierenden einzelnen Walze bei einer ersten Drehschnelligkeit, die zu einer ersten Tangentialdrehgeschwindigkeit in der ersten Richtung führt, die größer als die erste Translationsgeschwindigkeit ist; und
in einem zweiten Durchgang, Verdichten des Baumaterialpulvers auf der Oberfläche mit der einzelnen Walze, einschließlich:
Translatieren der einzelnen Walze in einer zweiten Richtung gegenüber der ersten Richtung bei einer zweiten Translationsgeschwindigkeit; und
Drehen der translatierenden einzelnen Walze bei einer zweiten Drehschnelligkeit, die zu einer zweiten Tangentialdrehgeschwindigkeit in der zweiten Richtung führt, die kleiner als die zweite Translationsgeschwindigkeit ist.

12. Speicher nach Anspruch 11, wobei:
ein Verhältnis zwischen der ersten Translationsgeschwindigkeit und der ersten Tangentialdrehgeschwindigkeit in dem Bereich von 1,0 bis 0,7, ausschließlich 1,0, liegt; und
ein Verhältnis zwischen der zweiten Translationsgeschwindigkeit und der zweiten Tangentialdrehgeschwindigkeit in dem Bereich von 1,0 bis 2,0, ausschließlich 1,0, liegt.

13. Speicher nach Anspruch 11, wobei die zweite Translationsgeschwindigkeit gleich der ersten Translationsgeschwindigkeit ist.

14. 3D-Drucker-Steuerung, die den Speicher nach Anspruch 11 implementiert.

## Revendications

1. Système destiné à une imprimante 3D, comprenant :
un rouleau (22) pour étaler et compacter de la poudre de matériau de construction (38) sur une surface (18) ; et
un dispositif de commande (64) connecté fonctionnellement au rouleau et programmé pour :
déplacer en translation et mettre en rotation simultanément le rouleau par-dessus la surface à une première vitesse de translation et avec une première vitesse tangentielle de rotation supérieure à la première vitesse de translation, pour étaler de la poudre de matériau de construction sur la surface en une couche ; et puis
déplacer en translation et mettre en rotation simultanément le rouleau par-dessus la surface à une seconde vitesse de translation et avec une seconde vitesse tangentielle de rotation inférieure à la seconde vitesse de translation, pour compacter la poudre de matériau de construction en couche sur la surface.

2. Système selon la revendication 1, dans lequel la seconde vitesse de translation est la même que la première vitesse de translation.

3. Système selon la revendication 1, dans lequel le dispositif de commande est programmé pour :
déplacer en translation et mettre en rotation simultanément le rouleau par-dessus la surface dans un premier passage à la première vitesse de translation et avec la première vitesse tangentielle de rotation pour étaler de la poudre de matériau de construction sur la surface ; et puis
déplacer en translation et mettre en rotation simultanément le rouleau par-dessus la surface dans un second passage à la seconde vitesse de translation et avec la seconde vitesse tangentielle de rotation pour compacter la poudre de matériau de construction sur la surface.

4. Système selon la revendication 3, dans lequel le dispositif de commande est programmé pour :
déplacer en translation et mettre en rotation simultanément le rouleau par-dessus la surface dans le premier passage à la première vitesse de translation dans une première direction et avec la première vitesse tangentielle de rotation dans la première direction ; et puis
déplacer en translation et mettre en rotation simultanément le rouleau par-dessus la surface dans le second passage à la seconde vitesse de translation dans une seconde direction opposée à la première direction et avec la seconde vitesse tangentielle de rotation dans la seconde direction.

5. Système selon la revendication 1, dans lequel :
un rapport entre la première vitesse de translation et la première vitesse tangentielle de rotation est dans la plage de 1,0 à 0,7, à l'exclusion de 1,0 ; et
un rapport entre la seconde vitesse de translation et la seconde vitesse tangentielle de rotation est dans la plage de 1,0 à 2,0, à l'exclusion de 1,0.

6. Système selon la revendication 3, dans lequel le rouleau peut se déplacer en translation le long d'un axe et l'axe de translation est le même pour l'un et l'autre des passages.

7. Système selon la revendication 1, dans lequel le rouleau est un rouleau contrarotatif qui effectue une rotation dans le sens de la marche pour pousser de la poudre sur la surface.

8. Procédé pour déposer en couche de la poudre de matériau de construction sur une surface dans une imprimante 3D, comprenant :
dans un premier passage par-dessus la surface, l'étalement (102) de poudre de matériau de construction sur la surface en une couche comprenant le fait de pousser de la poudre de matériau de construction à travers la surface avec un rouleau se déplaçant en translation à une première vitesse de translation et en rotation simultanée avec une première vitesse tangentielle de rotation supérieure à la première vitesse de translation ; et
dans un second passage par-dessus la surface, le compactage (104) de la poudre de matériau de construction en couche sur la surface comprenant le déplacement en translation du rouleau par-dessus la poudre de matériau de construction en couche à une seconde vitesse de translation et la rotation simultanée du rouleau à une seconde vitesse tangentielle de rotation inférieure à la seconde vitesse de translation.

9. Procédé selon la revendication 8, dans lequel :
un rapport entre la première vitesse de translation et la première vitesse tangentielle de rotation est dans la plage de 1,0 à 0,7, à l'exclusion de 1,0 ; et
un rapport entre la seconde vitesse de translation et la seconde vitesse tangentielle de rotation est dans la plage de 1,0 à 2,0, à l'exclusion de 1,0.

10. Procédé selon la revendication 9, dans lequel la seconde vitesse de translation est la même que la première vitesse de translation.

11. Mémoire ayant des instructions lisibles par processeur pour, dans une imprimante 3D comprenant un système comprenant un rouleau unique :
dans un premier passage, étaler de la poudre de matériau de construction par-dessus une surface avec le rouleau unique, y compris :
déplacer en translation le rouleau unique dans une première direction à une première vitesse de translation ; et
mettre en rotation le rouleau unique en translation à une première vitesse de rotation qui résulte en une première vitesse tangentielle de rotation dans la première direction supérieure à la première vitesse de translation ; et
dans un second passage, compacter la poudre de matériau de construction sur la surface avec le rouleau unique, y compris :
déplacer en translation le rouleau unique dans une seconde direction opposée à la première direction à une seconde vitesse de translation ; et
mettre en rotation le rouleau unique en translation à une seconde vitesse de rotation qui résulte en une seconde vitesse tangentielle de rotation dans la seconde direction inférieure à la seconde vitesse de translation.

12. Mémoire selon la revendication 11, dans laquelle :
un rapport entre la première vitesse de translation et la première vitesse tangentielle de rotation est dans la plage de 1,0 à 0,7, à l'exclusion de 1,0 ; et
un rapport entre la seconde vitesse de translation et la seconde vitesse tangentielle de rotation est dans la plage de 1,0 à 2,0, à l'exclusion de 1,0.

13. Mémoire selon la revendication 11, dans laquelle la seconde vitesse de translation est la même que la première vitesse de translation.

14. Dispositif de commande d'imprimante 3D implémentant la mémoire selon la revendication 11.
